# EUROPEAN PATENT APPLICATION

(11) **EP 4 783 032 A1**
(43) Date of publication of application: **29.07.2026**
(21) Application number: 23953099.1
(22) Date of filing: 22.09.2023
(51) Int. Cl.: G06F 16/908

(54) **INFORMATION PROCESSING DEVICE, INFORMATION PROCESSING METHOD, AND INFORMATION PROCESSING PROGRAM**

(71) Applicant: Tektome Inc., Tokyo 150-0012 (JP)
(72) Inventor: KITAMURA Naoki, Tokyo 150-0012 (JP); HAMILTON Francis Nils, Tokyo 150-0012 (JP)
(74) Representative: Germain Maureau
(86) International application number: PCT/JP2023/034488
(87) International publication number: WO 2025/062619

(57) **Abstract**

[Problem to be Solved]

In related art, there is a problem that desired information cannot be extracted from a large amount of file data in various formats, including a wide variety of information.

[Solution]

To solve the above-described problem, an information processing apparatus is provided which includes a first acceptance unit that accepts from a user, setting of a main prompt which is a prompt to be input to a large-scale language model and which gives an instruction of one or more extraction targets from a plurality of pieces of file data including a plurality of pieces of information, a second acceptance unit that accepts from the user, setting of a detailed prompt which is a prompt for making setting in detail for the instruction of the extraction targets by the main prompt and which has one or more items, and an extraction unit that extracts the extraction targets from the file data by inputting the main prompt by the setting accepted by the first acceptance unit and the detailed prompt by the setting accepted by the second acceptance unit to the large-scale language model.

## Description

### Technical Field

The present invention relates to an information processing apparatus that extracts desired information from a large amount of file data in various formats, including a wide variety of information.

### Background Art

For example, file data such as documents and drawings used in construction, design and earth-moving industries and in the plant industry includes a wide variety of information and comes in various formats. For example, the file data includes architectural drawings, rules and regulations documents, construction management histories, design outlines, elevations, detailed drawings, and the like, and, for example, in some cases, several hundred or more data items can be obtained from one piece of architectural design drawing data. These kinds of file data, which include information that is not neatly organized as in a format of "rows and columns" or in a "JSON format", is so-called unstructured file data and is not suitable for use, or the like, in search, statistical processing, and learning data of artificial intelligence (AI). It is therefore requested to structure these kinds of unstructured file data as in a spread sheet format.

To structure the unstructured file data as described above, it is necessary to extract, from the unstructured file data, individual pieces of information included therein for each data item. As a technique for extracting such information, for example, there is a technique described in Patent Literature 1.
Specifically, predetermined information is extracted from image data generated by reading a voucher that is a paper medium with an optical character reader (OCR) based on position information on a plane of paper defined for each item.

Meanwhile, in recent years, development of a technique of extracting information by utilizing artificial intelligence (AI) has been also progressing. For example, there is also a technique of reading a bill, converting the bill into text data and automatically extracting information (such as a "billing amount" and a "biller") necessary for accounting journalization processing (Non Patent Literature 1).

### Citation List

### Patent Literature

Patent Literature 1: Japanese Patent Laid-Open No. 2011-60219

### Non Patent Literature

Non Patent Literature 1: https://cloud.watch.impress.co.jp/docs/news/1349596.html

### Summary of Invention

### Technical Problem

A technique of extracting characters existing in a region defined in advance using position information as in Patent Literature 1 functions to perform extraction, or the like, from file data in a formulaic format. However, in a case where target file data has a wide variety of formats and includes a wide variety of data items, it is necessary to perform customization such as setting of regions and definitions for each piece of information included in the file data, and it is extremely difficult to perform the customization on all the wide variety of the file data because it takes an enormous amount of effort for a user.

Further, with the technique in Non Patent Literature 1, the automatically extracted information is information regarding accounting journalization processing, which is limited to information registered in advance by a person (such as a development company) who provides the application, and thus, information desired by the user cannot be extracted as appropriate from a wide variety of information included in file data in various formats.

### Solution to Problem

Thus, the present invention provides the following information processing apparatus, and the like, to solve the above-described problems. In other words, the present invention provides an information processing apparatus including a first acceptance unit that accepts from a user, setting of a main prompt which is a prompt to be input to a large-scale language model and which gives an instruction of one or more extraction targets from a plurality of pieces of file data including a plurality of pieces of information, a second acceptance unit that accepts from the user, setting of a detailed prompt which is a prompt for making setting in detail for the instruction of the extraction targets by the main prompt and which has one or more items, an accumulation unit that accumulates the main prompt by the setting accepted by the first acceptance unit and the detailed prompt by the setting accepted by the second acceptance unit, and an extraction unit that extracts the extraction targets from the plurality of pieces of file data by inputting the main prompt by the setting accepted by the first acceptance unit and the detailed prompt by the setting accepted by the second acceptance unit or/and the main prompt and the detailed prompt accumulated in the accumulation unit to the large-scale language model.

Further, in addition to the above features, the present invention provides the information processing apparatus further including a conversion unit that converts a format of the file data according to characteristics of the file data, in which the extraction unit performs extraction from the file data converted by the conversion unit.

Further, in addition to the above-described features, the present invention provides the information processing apparatus further including a verification unit that verifies an extraction result extracted by the extraction unit.

Further, in addition to the above-described features, the present invention provides the information processing apparatus in which the verification unit performs verification using the accepted setting of the detailed prompt.

Further, in addition to the above-described features, the present invention provides the information processing apparatus in which the extraction unit performs extraction again to reflect a verification result by the verification unit.

Further, in addition to the above-described features, the present invention provides the information processing apparatus further including a ground display unit that displays grounds for extraction of an extraction result for the extraction result extracted by the extraction unit.

Further, the present invention provides an information processing method to be executed by a computer in an information processing apparatus, the information processing method including a first acceptance step of accepting from a user, setting of a main prompt which is a prompt to be input to a large-scale language model and which gives an instruction of one or more extraction targets from a plurality of pieces of file data including a plurality of pieces of information, a second acceptance step of accepting from the user, setting of a detailed prompt which is a prompt for making setting in detail for the instruction of the extraction targets by the main prompt and which has one or more items, an accumulation step of accumulating the main prompt by the setting accepted in the first acceptance step and the detailed prompt by the setting accepted in the second acceptance step, and an extraction step of extracting the extraction targets from the plurality of pieces of file data by inputting the main prompt by the setting accepted in the first acceptance step and the detailed prompt by the setting accepted in the second acceptance step or/and the main prompt and the detailed prompt accumulated in the accumulation step to the large-scale language model.

Further, the present invention provides an information processing program for causing a computer to execute, in an information processing apparatus, a first acceptance step of accepting from a user, setting of a main prompt which is a prompt to be input to a large-scale language model and which gives an instruction of one or more extraction targets from a plurality of pieces of file data including a plurality of pieces of information, a second acceptance step of accepting from the user, setting of a detailed prompt which is a prompt for making setting in detail for the instruction of the extraction targets by the main prompt and which has one or more items, an accumulation step of accumulating the main prompt by the setting accepted in the first acceptance step and the detailed prompt by the setting accepted in the second acceptance step, and an extraction step of extracting the extraction targets from the plurality of pieces of file data by inputting the main prompt by the setting accepted in the first acceptance step and the detailed prompt by the setting accepted in the second acceptance step or/and the main prompt and the detailed prompt accumulated in the accumulation step to the large-scale language model.

### Advantageous Effect of Invention

According to the present invention, it is possible to extract desired information from a large amount of file data in various formats, including a wide variety of information.

### Brief Description of Drawings

[Figure 1] Figure 1 is a block diagram illustrating one example of a functional configuration of an information processing apparatus of a first embodiment.
[Figure 2] Figure 2 is a conceptual diagram illustrating an example where file data in a PDF format is converted into a text file to which position information is provided.
[Figure 3] Figure 3 is a conceptual diagram illustrating another example where a format of the file data is converted.
[Figure 4] Figure 4 is a view illustrating one example of a detailed prompt.
[Figure 5] Figure 5 is a view illustrating a method by which respective setting items of the detailed prompt are applied.
[Figure 6] Figure 6 is a conceptual diagram illustrating one example of an input screen when the detailed prompt is set.
[Figure 7] Figure 7 is a conceptual diagram illustrating a configuration example of hardware that implements the information processing apparatus of the first embodiment.
[Figure 8] Figure 8 is a flowchart indicating one example of flow of processing of the information processing apparatus of the first embodiment.
[Figure 9] Figure 9 is a block diagram illustrating one example of a functional configuration of an information processing apparatus of a second embodiment.
[Figure 10] Figure 10 is a view illustrating an example of various kinds of setting when verification is performed.
[Figure 11] Figure 11 is a block diagram illustrating one example of a functional configuration of an information processing apparatus of an embodiment.
[Figure 12] Figure 12 is a conceptual diagram illustrating an example where a position on an image is displayed as grounds.
[Figure 13] Figure 13 is a conceptual diagram illustrating another aspect of data reduction.

### Description of Embodiments

Embodiments of the present invention will be described below using the accompanying drawings. Note that the present invention should not be limited to these embodiments and can be implemented in various aspects without deviating from the gist.

### <First embodiment>

### <Outline>

The present invention configures a prompt for causing a large-scale language model (hereinafter, abbreviated and referred to as an LLM in some cases) to generate an output, so as to be settable by a user himself/herself, inputs the prompt set by the user to the LLM and extracts desired information from a large amount of file data in various formats, including a wide variety of information. Further, the present invention achieves improvement in extraction accuracy of information by the LLM, improvement in robustness (a degree of variety of formats from which extraction can be accurately performed), improvement in simpleness and operability and improvement in processing efficiency.

Functions of the information processing apparatus and flow of processing, and details of hardware will be described below. Note that functional blocks of the present system described below can be implemented as a combination of hardware and software. Specifically, examples of the hardware and the software can include, if a computer is utilized, hardware components such as a central processing unit (CPU), a main memory, a bus or a secondary storage device (such as a hard disk drive, a non-volatile memory, a storage medium such as a CD and a DVD, and a read drive of the media), an input device to be used for inputting information, a printer, a display device, and other external peripheral devices, an interface for the external peripheral devices, a communication interface, a driver program and other application programs for controlling these kinds of hardware, an application for user interface, and the like. Further, through calculation processing of the CPU in accordance with a program loaded on the main memory, data, or the like, which is input from the input device and other interfaces, or the like, and which is held on the memory or the hard disk is processed and accumulated, or a command for controlling the above-described hardware and software is generated. Alternatively, the functional blocks of the present system may be implemented by dedicated hardware.

Further, the present invention can be implemented not only as a system but also as a method. Still further, part of such an invention can be configured as software. Yet further, a program to be used for causing a computer to execute such software and a recording medium in which the program is fixed are of course included in the technical scope of the present invention (this similarly applies throughout the present specification).

### <Functional configuration>

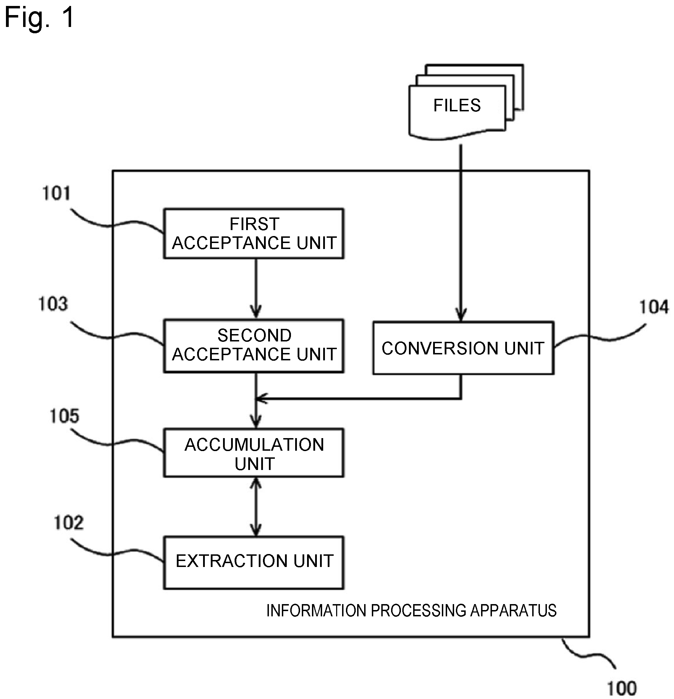

Figure 1 is a block diagram illustrating one example of a functional configuration of an information processing apparatus of the present embodiment. As illustrated in Figure 1, an information processing apparatus 100 includes a second acceptance unit 103, a conversion unit 104 and an accumulation unit 105 in addition to a first acceptance unit 101 and an extraction unit 102.

### <First acceptance unit>

The first acceptance unit 101 has a function of accepting setting of a main prompt which is a prompt to be input to a large-scale language model and which gives an instruction of one or more extraction targets from a plurality of pieces of file data including a plurality of pieces of information.

The main prompt can include a condition for deriving an appropriate answer and a case to be referred to as well as an instruction to the LLM. For example, when a main prompt that gives an instruction to extract a "drawing number" that is an ID of file data is set, a text such as the following text is set as the main prompt:
"Please extract a value of the "drawing number". The "drawing number" is an ID of the file and includes only alphanumeric characters and a hyphen. Further, the "drawing number" conforms to the following regular expression [A-Z]-¥d{5}."

Further, the number of main prompts is not limited to one, and a plurality of main prompts can be set. For example, instructions to extract a "drawing title" and extract a "type and the number of lifts" can be set together other than the above-described instruction to extract the "drawing number". In a case where the "drawing title" is extracted, a text such as the following text is set:
"Please extract a value of the "drawing title". The "drawing title" is a summary of content of the file and explains the outline of the file. The value is under characters of the "drawing title"".

Further, in a case where the "type and the number of lifts" are extracted, a text such as the following text is set:
"Please extract the type and the number of lifts. In a case where there is no corresponding value, please output a blank".

### <Extraction unit>

The extraction unit 102 has a function of extracting extraction targets from the plurality of pieces of file data by inputting the main prompt by the setting accepted by the first acceptance unit to the large-scale language model. The plurality of pieces of file data may be accumulated in a storage provided in the information processing apparatus or may be accumulated in a storage connected to the information processing apparatus via a communication line, or the like. Further, while there are many types of file formats of the file data and the file format is not limited, the file formats include, for example, a word file, a portable document format (PDF) file, an excel file, a comma separated values (CSV) file, a text file, a building information modeling (BIM) file, and the like.

Further, the plurality of pieces of file data are input to the LLM, and extraction targets are extracted by the instruction of the main prompt. Still further, the extraction targets can be extracted by further inputting a detailed prompt accepted by a second acceptance unit which will be described later. Yet further, the extraction targets can be extracted by inputting the main prompt and the detailed prompt accumulated in an accumulation unit which will be described later.

In a case where the above-described main prompt that gives an instruction to extract the "drawing number" is input, for example, "Z-01301" is extracted as the "drawing number" and can be output along with a file name thereof and a thumbnail image of the file data. Further, by tagging the extracted information and inputting and storing the information in an excel file or registering the extracted information in a database, the unstructured file data can be converted into structured data which is suitable for use in search, statistical processing, and learning data of AI, or the like.

Further, it is also possible to process the extracted information according to a format of file data at an extraction source as well as capturing the extracted information in an excel file, or the like, to create a database. For example, in a case of a CSV file, the extracted information may be added and stored while a new column (or row) is added into the CSV file. Further, in a case of an excel file, the extracted information is added and stored to a column or a sheet added into the excel file. Further, concerning a BIM file, the extracted information may be added and stored into the BIM file.

### <Conversion unit>

The conversion unit 104 converts the format of the file data according to characteristics of the file data. Note that in a case where the information processing apparatus includes the conversion unit, the extraction unit has a function of performing extraction from the file data converted by the conversion unit. For example, in a case where the file data is in a PDF format, the format of the file data is converted into a format of a text file. Further, in a case of image data, the format of the file data is converted into a format of a text file by performing character recognition using an OCR. Such conversion contributes to improvement in robustness.

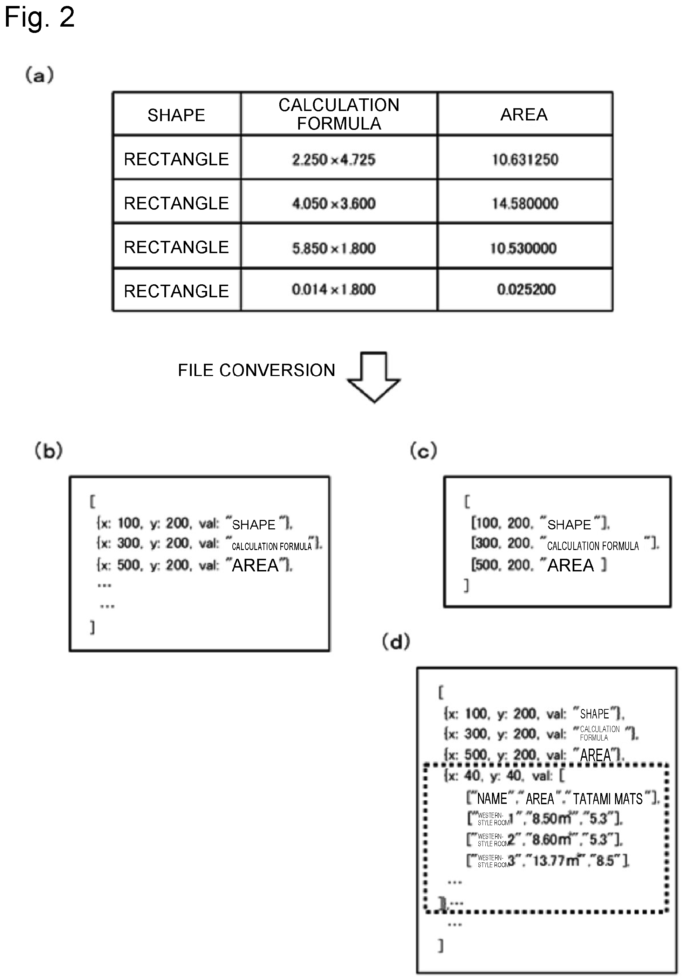

Further, it is preferable to perform conversion so as to provide position information of a text when the file data is converted into a text file. Figure 2 is a conceptual diagram illustrating an example where the file data in a PDF format is converted into a text file to which position information is provided. Figure 2(a) illustrates part of the file in the PDF format indicating a building area table of houses. Figure 2(b) illustrates an example where each text of "shape", "calculation formula" and "area" is converted into a JSON format described along with position information thereof. Further, Figure 2(c) illustrates an example where the text is converted into an Array format described along with the position information in a similar manner. In this manner, by the position information being provided, extraction is performed while a relationship between the texts is taken into account, which contributes to improvement in robustness. Note that in the above-described examples, the Array format is advantageous that the number of tokens to be input to the LLM can be reduced. Further, Figure 2(d) illustrates an example where a text indicating a table indicating an "area" and "tatami mats" of each of "western-style room 1", "western-style room 2" and "western-style room 3" in the original file is converted into a text (within a dotted frame in the drawing) having table information instead of the position information. Through such conversion, it is possible to input the information to the LLM while maintaining a table structure.

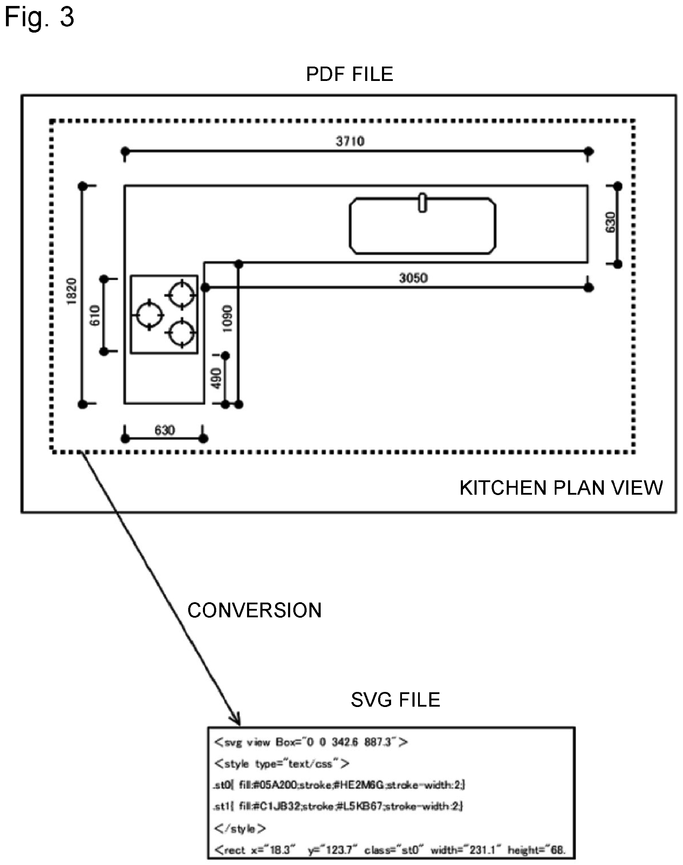

Figure 3 is a conceptual diagram illustrating another example where the format of the file data is converted. As illustrated in Figure 3, in a case of a file (kitchen plan view) including figures, extraction can be easily performed in the LLM by converting the format in the SVG format and converting the file into a text having figure information.

### <Second acceptance unit>

The second acceptance unit 103 has a function of accepting from the user, setting of a detailed prompt which is a prompt for making setting in detail for the instruction of the extraction targets by the main prompt and which has one or more items.

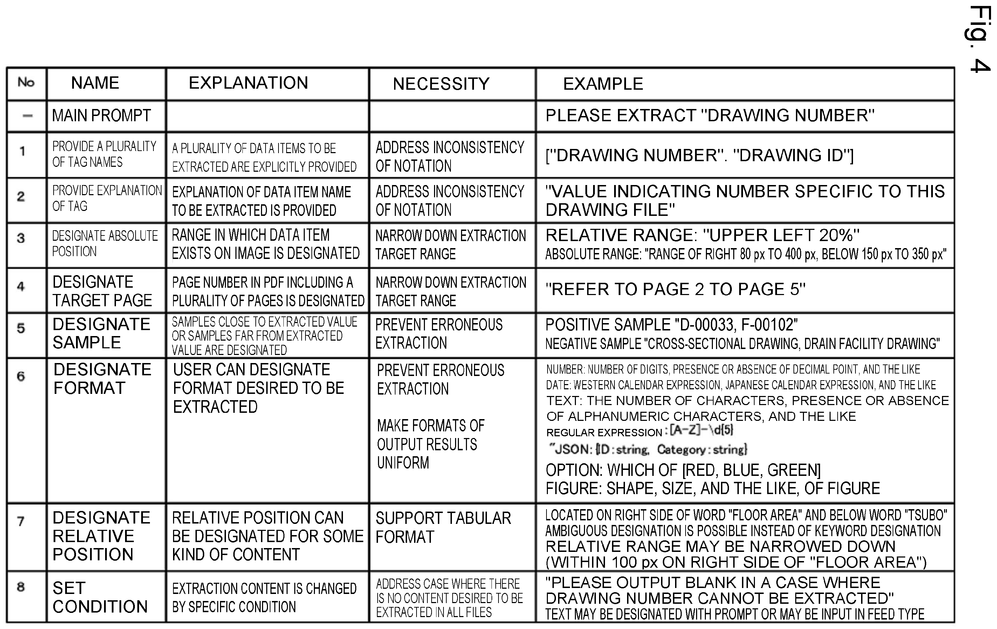

Figure 4 is a view indicating one example of the detailed prompt. In the first row, "No", "name", "explanation", "necessity", "example" of the setting item are indicated. In the present example, the main prompt is "please extract a value of the "drawing number"", and the instruction of this main prompt is set in detail.

For example, it is indicated that a setting item 1 has a name of "provide a plurality of tag names" and is a setting item to "address inconsistency of notation". Further, as explanation of the setting item 1, it is indicated that "a plurality of data item names to be extracted are explicitly provided", and as an example thereof, "["drawing number", "drawing ID"]" is indicated. By setting this detailed prompt, for the instruction of "please extract a value of the "drawing number"", an instruction of targeting not only the "drawing number" but also the "drawing ID" as extraction targets is added.

Other than this, setting items of the detailed prompt include "provide explanation of a tag" that provides explanation of a data item name to be extracted to address inconsistency of notation, "designate an absolute position" that designates a range in which a data item exists on an image, and "designate a target page" that designates a page in a PDF including a plurality of pages, to narrow down an extraction target range, "designate a sample" that designates samples close to the extracted value or samples far from the extracted value to prevent erroneous extraction, "designate a format" capable of designating a format that is desired to be extracted by the user to prevent erroneous extraction and make formats of output results uniform, "designate a relative position" capable of designating a relative position with respect to some kind of content to support a tabular format, and "set a condition" that changes extracted content by a specific condition to address a case where there is no content that is desired to be extracted in all the files. Of course, the setting items are not limited to these, and the user himself/herself can set the detailed prompt by providing various setting items.

Here, methods for applying the above-described setting items can be roughly divided into three methods of a method 1 of "narrow down content of the file", a method 2 of "link prompts", and a method 3 of "confirm a detection result and perform reshaping". The method 1 means narrowing down file data to be input before the file data is input to the LLM, and the method 2 means linking the set detailed prompt to the main prompt. The method 3 means reshaping the extraction result according to the designated sample, format, or the like.

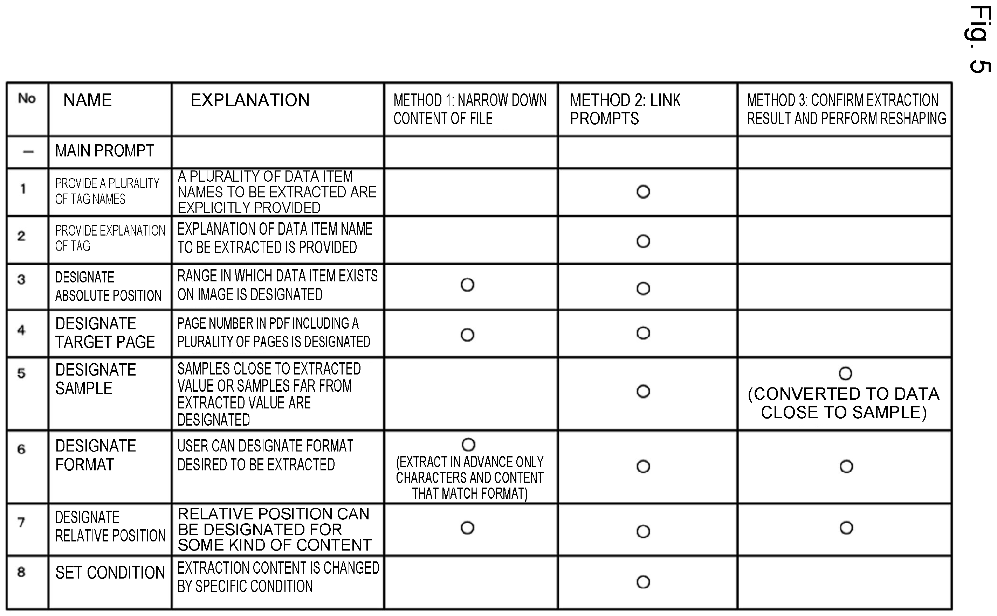

Figure 5 is a view indicating methods by which respective setting items of the detailed prompt are applied. As indicated, the respective items of "provide a plurality of tag names", "provide explanation of a tag" and "set a condition" are applied in the method 2 of "link prompts". Further, "designate an absolute position" and "designate a target page" are applied in the method 1 of "narrow down content of the file" and the method 2. Further, "designate a sample" is applied in the method 2 and the method 3 of "confirm an extraction result and perform reshaping". Still further, "designate a format" and "designate a relative position" are applied in all of the method 1 to method 3. Application examples will be described later.

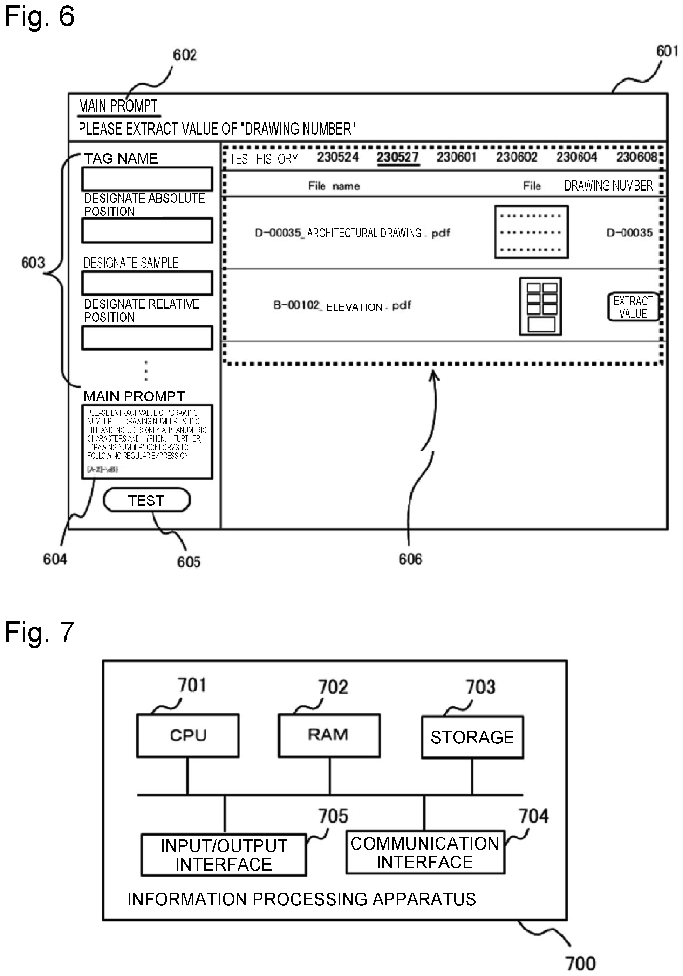

Figure 6 is a conceptual diagram illustrating one example of an input screen when the detailed prompt is set. As illustrated, a main prompt 602 that has already been set is displayed in an upper left part of a screen 601. Further, input fields 603 of respective setting items of "tag name", "designate an absolute position", "designate a sample" and "designate a relative position" are displayed in a left part of the screen. Further, input fields of another setting items are displayed through operation of the user. The detailed prompt is set by accepting input operation by the user with respect to these input fields. Further, the extraction unit performs extraction by applying accepted setting of the detailed prompt. By performing extraction while setting the detailed prompt in this manner, it is possible to achieve improvement in extraction accuracy.

An example where the detailed prompt as described above is applied will be illustrated. For example, in a case where "content similar to D-00033, F-00102" is set in the item of "designate a sample", and "this item is in a lower left part of the page" is set in the item of "designate a relative position", this detailed prompt is linked to the main prompt and input. Further, by application of "designate a relative position", only the lower left part of the page is input for the file data to be input to the LLM (method 1: narrow down content of the file). Further, by application of "designate a sample", a drawing number whose extracted "drawing number" is similar to "D-00033, F-00102" is extracted (method 3: confirm the extraction result and perform reshaping). The reshaping in this event may be performed using the LLM or may be performed by separately inputting a script that gives an instruction to perform reshaping.

Further, the second acceptance unit can be configured to automatically set respective setting items according to the set main prompt upon accepting setting of the detailed prompt. Alternatively, the second acceptance unit may be configured to recommend some kind of setting for items not set while accepting setting by the user. By accepting setting of the detailed prompt from the user, while extraction can be performed flexibly along intention of the user and suitably, there is a case where it is difficult for the user to set an optimum prompt. Thus, functions of automatically inputting and suggesting the detailed prompt in this manner are effective. It is possible to achieve simplification and improvement in operability by these functions.

Further, to achieve simplification and improvement in operability, the extraction unit is also preferably configured to perform test extraction using the set main prompt or the set main prompt and detailed prompt before extraction is performed for all the file data that can become targets. The test extraction means performing extraction for part of the file data that can become targets. As a result of this test extraction, the user can determine whether or not the set main prompt and detailed prompt bring an extraction result desired by the user and can set the prompts again to obtain a more desired extraction result.

As illustrated in Figure 6, a "test" button 605 is displayed in a left part of the screen 601 and below an input field 603 of the detailed prompt and a display field 604 of the main prompt, and text extraction is performed by this button. Then, a result of the test extraction is displayed within a dotted frame 606 added for explanation in the drawing. The user can set the prompts again or perform actual extraction using the prompts with which the result of the test extraction is obtained based on this extraction result.

### <Accumulation unit>

The accumulation unit 105 has a function of accumulating the main prompt by the setting accepted by the first acceptance unit and the detailed prompt by the setting accepted by the second acceptance unit. Further, the accumulation unit 105 may accumulate the extraction result and the file data used for the extraction in association with the main prompt and the detailed prompt used for the extraction. The main prompt and the detailed prompt accumulated in the accumulation unit are used for extraction by the extraction unit by being input to the LLM instead of or along with the main prompt and the detailed prompt by the setting accepted by the first acceptance unit and the second acceptance unit.

For example, when extraction processing on certain file data is performed for the first time, extraction is performed by inputting the main prompt and the detailed prompt set by the first acceptance unit and the second acceptance unit to the LLM. Then, in a case where extraction is performed again because change, or the like, (such as addition and deletion) occurs in files included in the file data, the main prompt and the detailed prompt which are used in the previous extraction processing and which are accumulated in the accumulation unit are read out and input to the LLM to perform extraction after setting is changed as necessary. Further, it is also possible to employ a configuration where the main prompt and the detailed prompt accumulated in the accumulation unit are selected by the user to be used for the extraction processing, or recommended main prompt and detailed prompt are presented from the accumulated prompts when the file data to be used for the extraction processing is selected. With such a configuration, it is possible to save the effort of setting prompts every time extraction is performed and extract appropriate prompts each time for the file data, which results in making it possible to obtain an effect of, for example, being able to maintain the latest database.

### <Hardware configuration>

Figure 7 is a conceptual diagram illustrating a configuration example of hardware that implements the information processing apparatus according to the first embodiment. As illustrated, an information processing apparatus 700 includes a CPU 701 that performs various kinds of calculation processing, a RAM 702 that is a volatile recording medium, a storage 703 such as a flash memory and an HDD which is a non-volatile storage medium, a communication interface 704, and an input/output interface 705. The RAM 702 reads out a program that performs various kinds of calculation processing so as to cause the CPU 701 to execute the program and provides a work area of the program. Further, a plurality of addresses are allocated in the RAM 702, and by specifying an address and accessing the program to be executed by the CPU 701, processing can be performed while data is exchanged with each other (this similarly applies throughout the present specification).

Here, respective functions of the first acceptance unit 101, the second acceptance unit 103, the extraction unit 102 and the conversion unit 104 of the information processing apparatus 100 in Figure 1 are mainly implemented by the CPU 701 and the RAM 702 in Figure 7. Further, functions of the accumulation unit 105 are mainly implemented by the storage 703 in Figure 7. Still further, in a case of using a large-scale language model in which a database that accumulates file data exists outside or the extraction unit exists outside, the respective functions are implemented by signals and information being given and received to and from each other via the communication interface 704 and the input/output interface 705.

### <Processing flow>

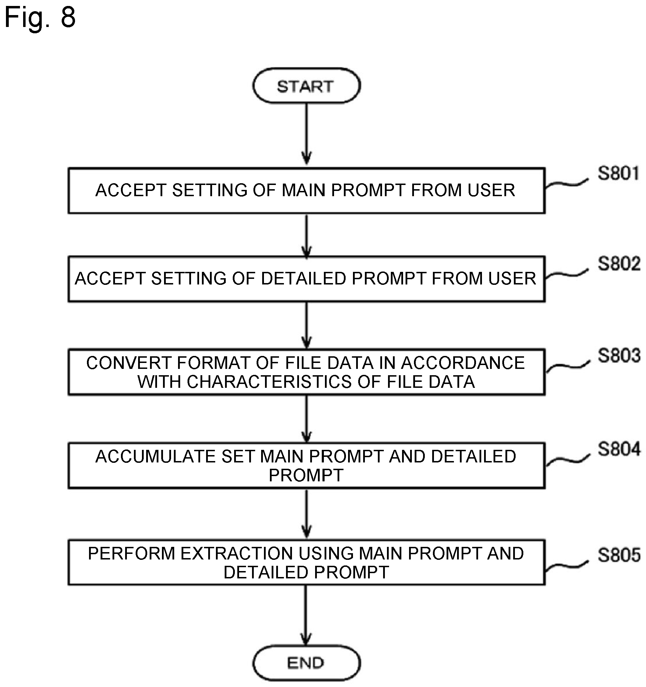

Figure 8 is a flowchart indicating one example of flow of processing of the information processing apparatus in a simplified manner. First, setting of a main prompt which is a prompt to be input to the large-scale language model and which gives an instruction of one or more extraction targets from a plurality of pieces of file data including a plurality of pieces of information is accepted from the user (S801: first acceptance step). Then, setting of a detailed prompt which is a prompt for making setting in detail for the instruction of the extraction targets by the main prompt and which has one or more items is accepted from the user (S802: second acceptance step). Then, a format of the file data is converted according to characteristics of the file data (S803: conversion step). Then, the main prompt by the setting accepted in the first acceptance step and the detailed prompt by the setting accepted in the second acceptance step are accumulated (S804: accumulation step). Then, the extraction targets are extracted from the plurality of pieces of file data (S805: extraction step) by inputting the main prompt by the setting accepted in the first acceptance step and the detailed prompt by the setting accepted in the second acceptance step or/and the main prompt and the detailed prompt accumulated in the accumulation step to the large-scale language model. Note that the conversion step may be performed before the first acceptance step or may be performed after the first acceptance step and before the second acceptance step.

### <Effects>

According to the information processing apparatus of the present embodiment, it is possible to extract desired information from a large amount of file data in various formats, including a wide variety of information.

### <Second embodiment>

### <Outline>

The present embodiment is an information processing apparatus further including a component that verifies the extraction result and a component that filters file data to be input to the LLM based on the first embodiment.

### <Functional configuration>

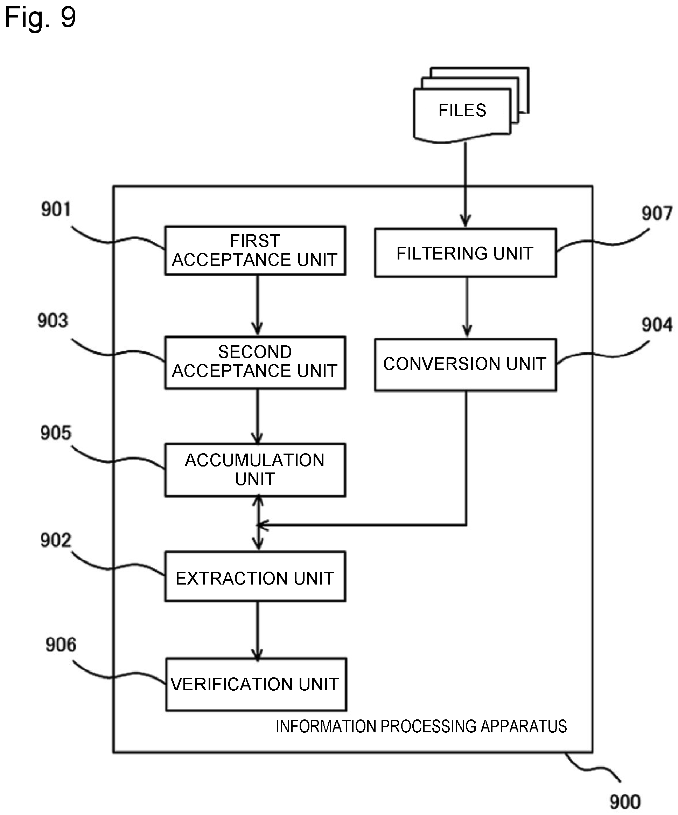

Figure 9 is a block diagram illustrating one example of a functional configuration of the information processing apparatus of the present embodiment. As illustrated in Figure 9, the information processing apparatus 900 includes a first acceptance unit 901, an extraction unit 902, a second acceptance unit 903, a conversion unit 904 and an accumulation unit 905 in a similar manner to the first embodiment, and further includes a verification unit 906 and a filtering unit 907. Description of components similar to the components in the first embodiment will be omitted, and the verification unit 906 and the filtering unit 907 will be described below.

### <Verification unit>

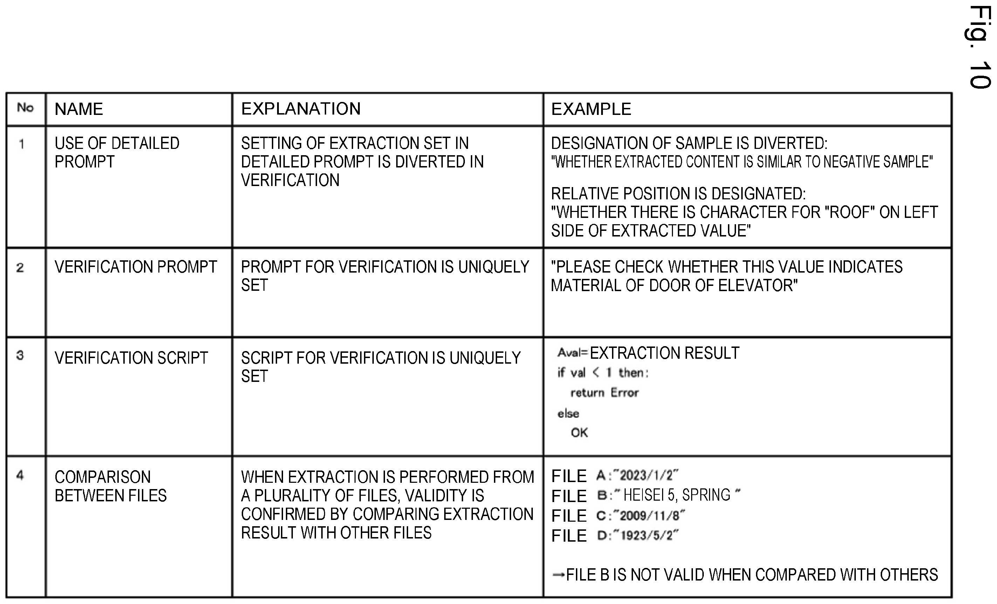

The verification unit 906 has a function of verifying the extraction result extracted by the extraction unit. The verification unit specifically performs verification in various aspects. Figure 10 is a view illustrating various kinds of setting when verification is performed. As illustrated, four types of setting can be performed, which are respectively "use of a detailed prompt", a "verification prompt", a "verification script" and "comparison between files".

In "use of a detailed prompt", setting of the extraction set in the detailed prompt is used in verification. For example, in a case where a negative sample is designated in "designate a sample" that is a setting item of the detailed prompt, the designated negative sample is diverted and verification as to "whether the extraction result is similar to the negative sample" is performed. Further, verification of "whether there is a character of "roof" on the left side of the extracted value" is performed by utilizing setting in "designate a relative position".

Further, in the "verification prompt", a prompt for verification is uniquely set, and, for example, a prompt of "please check whether this value indicates a material of a door of an elevator" is set and input. Still further, in the "verification script", a script for verification is uniquely set, and, for example, as illustrated, verification is performed while a command to return "Error" in a case where the detection result is less than "1" and return "OK" in other cases is input.

Further, in "comparison between files", validity is confirmed by comparing the extraction result with other files when extraction is performed from a plurality of files. As illustrated in the example, if the extracted files A to D are compared, while all of the file A, the file C and the file D include notation of only numbers and symbols, the file B include notation mainly including Chinese characters. In such a case, a verification result that "the file B is not valid compared to other files" is obtained.

Here, in a case where the extraction result is verified by the verification unit, the extraction unit can be configured to perform extraction again to reflect the verification result. For example, in a case where a value of the extraction result is an error as described above, an instruction such as "A value AAA is extracted in the previous extraction, but an error verification result is obtained. Please extract a value again in view of this error result" is input, and extraction is performed again.

### <Filtering unit>

The filtering unit 907 has a function of removing predetermined file data among the plurality of pieces of file data from extraction targets by the extraction unit. There are various filtering methods. For example, filtering is performed based on attributes (such as an extension, a size, file name, and a data item attached to the file) of the file. Further, individual keywords are set, and filtering is performed based on the keywords. Specifically, filtering is performed by performing semantic search, clustering, character search, or the like. Further, filtering is performed by giving an instruction to the LLM. For example, by inputting an instruction of "whether this file includes content of an elevator", filtering can be performed as to whether or not the file includes content of the elevator.

With such functions of the filtering unit, for example, it is possible to respond to a request of the user that while it is desired to extract an area from a summary of architecture, it is desired to skip elevations from target 500 pieces of file data.

### <Hardware configuration>

The information processing apparatus of the present embodiment can be implemented by the hardware configuration illustrated in Figure 7 according to the first embodiment. Functions of the verification unit 906 and the filtering unit 907 which are specific components of the information processing apparatus of the second embodiment illustrated in Figure 9 are mainly implemented by the CPU 701 and the RAM 702 in Figure 7.

### <Processing flow>

Processing flow of the information processing apparatus of the present embodiment is basically similar to the processing flow of the information processing apparatus of the first embodiment. Further, in the information processing apparatus of the present embodiment, a verification step of verifying the extraction result extracted in the extraction step, and a filtering step of removing predetermined file data among the plurality of pieces of file data from the extraction targets in the extraction step are further provided.

### <Effects>

According to the information processing apparatus of the present embodiment, it is possible to provide an information processing apparatus which achieves further improvement in accuracy and further improvement in robustness.

### <Third embodiment>

### <Outline>

The present embodiment is an information processing apparatus further including a component that displays grounds for extraction of the extraction result to improve simpleness and operability or a component that reduces data to be used for extraction processing to improve processing efficiency based on the first embodiment or the second embodiment.

### <Functional configuration>

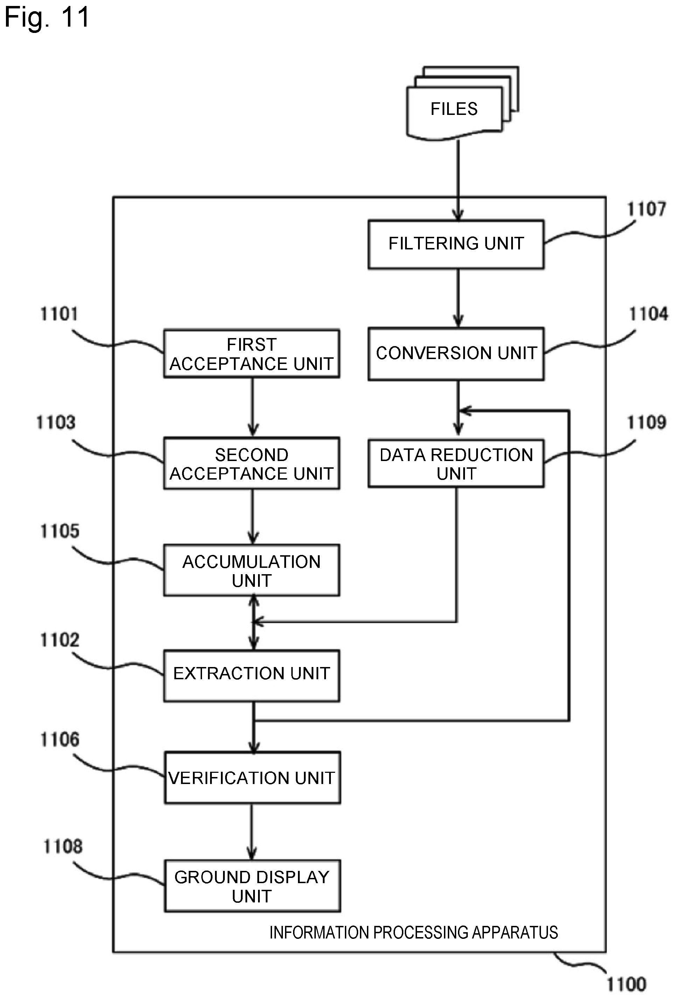

Figure 11 is a block diagram illustrating one example of a functional configuration of the information processing apparatus of the present embodiment. As illustrated in Figure 11, an information processing apparatus 1100 includes a first acceptance unit 1101, an extraction unit 1102, a second acceptance unit 1103, a conversion unit 1104, an accumulation unit 1105, a verification unit 1106 and a filtering unit 1107 in a similar manner to the first embodiment, and further includes a ground display unit 1108 and a data reduction unit 1109. Description of components similar to those in the first embodiment or the second embodiment will be omitted, and the ground display unit 1108 and the data reduction unit 1109 will be described below.

### <Ground display unit>

The ground display unit 1108 has a function of displaying grounds for extraction of the extraction result extracted by the extraction unit. Note that while in Figure 11, the verification unit 1106 is provided before the ground display unit 1108, grounds for the extraction result by the extraction unit 1102 can be displayed without going through the verification unit 1106.

With the present information processing method, it is possible to perform extraction flexibly along intention of the user by the user himself/herself setting prompts and giving an instruction to the LLM. On the other hand, there is a case where it is difficult to set optimum prompts along the intention. Thus, by displaying grounds (such as an intermediate process) leading to the extraction result, it is possible to indicate "how and what can improve the extraction result" to the user.

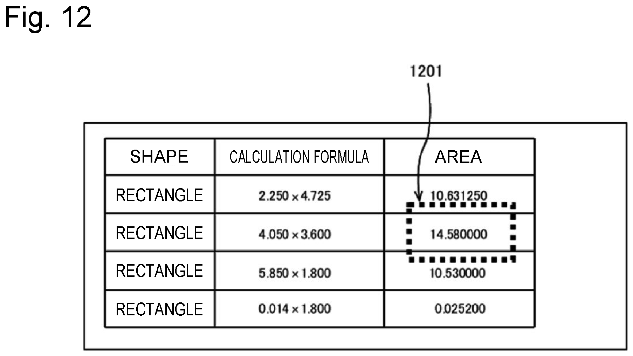

Figure 12 is a conceptual diagram illustrating an example where a position on the image is displayed as grounds. Figure 12 illustrates a file in a PDF format indicating a building area table of houses, and a position of a value (character) extracted from this file is highlighted by being enclosed with a thick dotted frame 1201 on the image. This enables the user to understand the position from which the extraction result is extracted.

Further, display that explains reasons for extraction may be provided. For example, an instruction of "please output a reason why this value is output as the extraction result for each detailed process" is input to the LLM before the extraction as pre-processing. By this means, the extraction result is indicated after the extraction, and, for example, grounds that "Z-01301 is located at 140 px rightward from a text "drawing number" and matches the designated regular expression, and thus, Z-01301 has been extracted as the drawing number" are displayed. In this way, by indicating the influence exerted on the extraction result by the prompts set by the user, the user can reexamine the prompts set by the user, which can contribute to optimization of the prompts.

### <Data reduction unit>

The data reduction unit 1109 has a function of reducing data of the file data to be used at the extraction unit. The data can be reduced in various aspects. For example, the data can be reduced by narrowing down target file data to specific pages, sections, paragraphs, tables, and the like. Further, it is possible to perform filtering with attributes (such as a page number and a position) of the file or perform filtering (semantic search, clustering and character search) with individual keywords. Still further, it is also possible to perform filtering by inputting an instruction to the LLM ("whether this file includes content of an elevator").

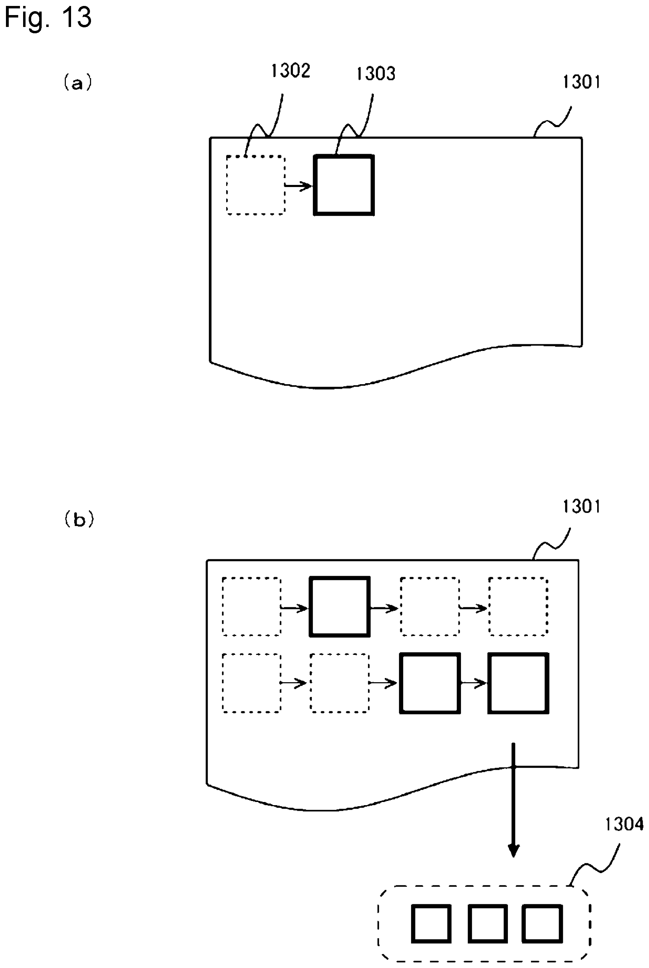

Figure 13 is a conceptual diagram illustrating another aspect of the data reduction. As illustrated in Figure 13(a), a specific portion 1302 is cut in one piece of file data 1301, and whether target data is included is checked. If the target data is included, the portion is used for extraction processing by the extraction unit. In a case where the target data is not included, a portion 1303 displaced from the previous portion is cut, and check is performed in a similar manner. By excluding portions not including the target data from the extraction targets through check before the extraction in this manner, it is possible to achieve improvement in processing efficiency. Note that this check may be performed using the LLM or may be performed using other methods.

Further, as illustrated in Figure 13(b), the above-described check is performed while the specific portion is displaced, and portions including the target data are temporarily stored in the memory 1304. Then, whether the processing memory 1304 includes all elements necessary for extracting the target data is checked, and in a case where all the elements are included, the portions stored in the memory are used for extraction processing by the extraction unit. On the other hand, in a case where all the elements are not included, the specific portion is further displaced, and a series of processing from the above-described check is repeated.

### <Hardware configuration>

The information processing apparatus of the present embodiment can be implemented by the hardware configuration illustrated in Figure 7 according to the first embodiment or the second embodiment. Functions of the ground display unit 1108 which is a specific component of the information processing apparatus of the third embodiment illustrated in Figure 11 are mainly implemented by the CPU 701, the RAM 702, the input/output interface 705 in Figure 7. Further, functions of the data reduction unit 1109 are mainly implemented by the CPU 701 and the RAM 702 in Figure 7.

### <Processing flow>

Processing flow of the information processing apparatus of the present embodiment is basically similar to the processing flow of the information processing apparatus of the first embodiment or the second embodiment. Further, in the information processing apparatus of the present embodiment, a ground display step of displaying grounds for extraction of an extraction result for the extraction result extracted in the extraction step, and a data reduction step of reducing data of the file data to be used in the extraction step are further provided.

### <Effects>

According to the information processing apparatus of the present embodiment, it is possible to provide an information processing apparatus that achieves further improvement in simpleness and operability and further improvement in processing efficiency.

### Reference Signs List

100: Information processing apparatus
101: First acceptance unit
102: Extraction unit
103: Second acceptance unit
104: Conversion unit
105: Accumulation unit
906: Verification unit
907: Filtering unit
1108: Ground display unit
1109: Data reduction unit
701: CPU
702: RAM
703: Storage
704: Communication interface
705: Input/output interface

## Claims

1. An information processing apparatus comprising:
a first acceptance unit that accepts from a user, setting of a main prompt which is a prompt to be input to a large-scale language model and which gives an instruction of one or more extraction targets from a plurality of pieces of file data including a plurality of pieces of information;
a second acceptance unit that accepts from the user, setting of a detailed prompt which is a prompt for making setting in detail for the instruction of the extraction targets by the main prompt and which has one or more items;
an accumulation unit that accumulates the main prompt by the setting accepted by the first acceptance unit and the detailed prompt by the setting accepted by the second acceptance unit; and
an extraction unit that extracts the extraction targets from the plurality of pieces of file data by inputting the main prompt by the setting accepted by the first acceptance unit and the detailed prompt by the setting accepted by the second acceptance unit or/and the main prompt and the detailed prompt accumulated in the accumulation unit to the large-scale language model.

2. The information processing apparatus according to claim 1, further comprising:
a conversion unit that converts a format of the file data according to characteristics of the file data,
wherein the extraction unit performs extraction from the file data converted by the conversion unit.

3. The information processing apparatus according to claim 1 or 2, further comprising:
a verification unit that verifies an extraction result extracted by the extraction unit.

4. The information processing apparatus according to claim 3,
wherein the verification unit performs verification using the accepted setting of the detailed prompt.

5. The information processing apparatus according to claim 3 or 4,
wherein the extraction unit performs extraction again to reflect a verification result by the verification unit.

6. The information processing apparatus according to claim 1 or 2, further comprising:
a ground display unit that displays grounds for extraction of an extraction result for the extraction result extracted by the extraction unit.

7. An information processing method to be executed by a computer in an information processing apparatus, the information processing method comprising:
a first acceptance step of accepting from a user, setting of a main prompt which is a prompt to be input to a large-scale language model and which gives an instruction of one or more extraction targets from a plurality of pieces of file data including a plurality of pieces of information;
a second acceptance step of accepting from the user, setting of a detailed prompt which is a prompt for making setting in detail for the instruction of the extraction targets by the main prompt and which has one or more items;
an accumulation step of accumulating the main prompt by the setting accepted in the first acceptance step and the detailed prompt by the setting accepted in the second acceptance step; and
an extraction step of extracting the extraction targets from the plurality of pieces of file data by inputting the main prompt by the setting accepted in the first acceptance step and the detailed prompt by the setting accepted in the second acceptance step or/and the main prompt and the detailed prompt accumulated in the accumulation step to the large-scale language model.

8. An information processing program for causing a computer to execute, in an information processing apparatus:
a first acceptance step of accepting from a user, setting of a main prompt which is a prompt to be input to a large-scale language model and which gives an instruction of one or more extraction targets from a plurality of pieces of file data including a plurality of pieces of information;
a second acceptance step of accepting from the user, setting of a detailed prompt which is a prompt for making setting in detail for the instruction of the extraction targets by the main prompt and which has one or more items;
an accumulation step of accumulating the main prompt by the setting accepted in the first acceptance step and the detailed prompt by the setting accepted in the second acceptance step; and
an extraction step of extracting the extraction targets from the plurality of pieces of file data by inputting the main prompt by the setting accepted in the first acceptance step and the detailed prompt by the setting accepted in the second acceptance step or/and the main prompt and the detailed prompt accumulated in the accumulation step to the large-scale language model.
